# FASCICULE DE BREVET EUROPEEN

(11) **EP 3 962 816 B1**
(45) Date de publication et mention de la délivrance du brevet: **08.05.2024**
(21) Numéro de dépôt: 20848992.2
(22) Date de dépôt: 17.12.2020
(51) Int. Cl.: B64G 1/64

(54) **DISPOSITIF D'ARRIMAGE AMORTISSANT A UN SATELLITE**
VORRICHTUNG ZUR DÄMPFUNG DES ANDOCKENS AN EINEN SATELLITEN
DEVICE FOR DAMPING DOCKING TO A SATELLITE

(30) Priorité: 20.12.2019 FR 1915179
(43) Date de publication de la demande: 09.03.2022
(73) Titulaire: Airbus Defence and Space SAS, 31402 Toulouse Cedex 4 (FR)
(72) Inventeur: TAJAN, Florent, 31402 TOULOUSE Cedex 4 (FR); BLAIS, Thierry, 31402 TOULOUSE Cedex 4 (FR)
(74) Mandataire: Plasseraud IP
(86) Numéro de dépôt international: PCT/FR2020/052491
(87) Numéro de publication internationale: WO 2021/123632

(56) Documents cités:
- EP-A1- 3 012 194
- RU-C1- 2 131 829
- RU-C1- 2 657 623
- US-A- 4 500 057
- US-A- 5 040 749
- US-A1- 2018 251 240

## Description

### Domaine technique

La présente demande concerne un dispositif d'arrimage d'un engin spatial à un satellite, y compris un satellite ne comprenant pas d'équipement spécifique dédié à cet effet. Elle concerne également un procédé d'arrimage et de désarrimage mis en oeuvre avec un tel dispositif.

### Technique antérieure

Pour pouvoir refaire le plein d'ergols d'un satellite en opération, ou pour pouvoir déplacer un satellite d'une orbite à une autre, il faut pouvoir accrocher un engin spatial de remorquage ou de ravitaillement au satellite, d'une façon qui ne perturbe pas la mission du satellite, c'est-à-dire qui ne modifie pas la position et l'orientation du satellite. Ceci est particulièrement critique par exemple pour des satellites de télécommunications en orbite géostationnaire, qui ne doivent pas subir de mouvement autour de leur attitude de fonctionnement.

Ceci implique que le contact entre l'engin spatial et le satellite soit réalisé à une vitesse relative la plus faible possible, idéalement nulle, et avec des efforts de contact sur le satellite les plus faibles possibles, idéalement nuls.

Or, les satellites actuellement en opération ne comprennent aucun équipement dédié spécifiquement à l'arrimage à un engin spatial de remorquage ou de ravitaillement.

On connaît du document RU 2 657 623 un dispositif d'arrimage à un satellite comprenant une plate-forme mobile portée par six bras indépendants, chaque bras comprenant une liaison bille-écrou convertissant un mouvement de translation d'un bras en un mouvement de rotation, ce mouvement de rotation étant transmis à un ressort de torsion coaxial d'un mécanisme à cliquet et d'un embrayage à friction électromagnétique permettant sélectivement d'autoriser ou d'interdire le déploiement des bras.

Le document RU 2 131 829 décrit un dispositif d'arrimage androgyne pour un satellite muni d'un dispositif équivalent.

Le document EP 3 012 194 décrit un système de manipulation d'un objet spatial comprenant une structure articulée munie d'un actionneur unique pour contrôler le déploiement de la structure, la préhension de l'objet et le repliement de la structure.

### Résumé

L'invention a pour but de proposer un dispositif d'arrimage d'un engin spatial de remorquage ou de ravitaillement à un satellite ne disposant pas d'équipement prévu à cet effet, et ne perturbant pas l'attitude du satellite lors de l'arrimage.

A cet égard, l'invention propose un dispositif selon la revendication 1.

Dans l'invention, chaque bras de liaison est articulé, et l'ensemble d'amortisseurs magnétiques comprend, pour chaque bras de liaison, un amortisseur magnétique rotatif.

Chaque bras articulé peut comprendre deux tiges, une première tige comprenant une première extrémité reliée à la plate-forme de réception par une première liaison sphérique, et une deuxième extrémité reliée à la deuxième tige par une deuxième liaison sphérique, et la deuxième tige étant mobile en rotation par rapport à l'engin spatial autour d'un axe.

Chaque amortisseur magnétique peut comprendre un stator monté fixe par rapport à l'engin spatial et un rotor rotatif par rapport au stator, et la deuxième tige de chaque bras est adaptée pour entrainer en rotation le rotor de l'amortisseur magnétique du bras.

La deuxième tige peut entrainer en rotation le rotor de l'amortisseur magnétique via un réducteur adapté pour multiplier la vitesse de rotation de la deuxième tige par rapport au stator de l'amortisseur magnétique d'un facteur supérieur à 10.

Dans un mode de réalisation, le dispositif d'arrimage comprend en outre pour chaque bras articulé un capteur de position angulaire de la deuxième portion du bras.

Dans un mode de réalisation, les amortisseurs magnétiques rotatifs sont répartis selon une disposition circulaire, les axes de rotation des amortisseurs s'étendant radialement.

Dans un mode de réalisation, le dispositif d'arrimage comprend en outre un circuit électronique de commande des amortisseurs magnétiques, adapté pour contrôler les amortisseurs magnétiques selon trois modes comprenant :
- un mode amortisseur, dans lequel un mouvement du bras de liaison est amorti par dissipation d'énergie cinétique par courant de Foucault,
- un mode actionneur, permettant de contrôler un mouvement du bras de liaison, et
- un mode libre, dans lequel un mouvement du bras de liaison n'entraine aucun amortissement.

Dans un mode de réalisation, le dispositif d'amortissement et de positionnement de la plate-forme de réception comprend en outre une plate-forme de liaison à l'engin spatial, adaptée pour être assemblée audit engin, et l'ensemble des bras articulés relie la plate-forme de réception à la plate-forme de liaison.

Dans un mode de réalisation, le dispositif de capture comprend un ensemble de tiges de retenue montées sur la plate-forme de réception, et comprenant au moins six points d'appui sur un élément saillant de satellite, et un actionneur adapté pour amener les points d'appui de l'ensemble des tiges de retenue en appui contre l'élément saillant du satellite.

Dans un mode de réalisation, l'ensemble de tiges de retenue comprend six tiges réparties circulairement à la périphérie de la plate-forme de réception, chaque tige de retenue étant montée rotative autour d'un axe tangentiel, et l'actionneur comprend un système d'actionnement à poulies et courroies adapté pour permettre une mise en rotation simultanée des tiges vers le centre de la plate-forme de réception.

La présente porte également sur un procédé d'arrimage d'un engin spatial de remorquage ou de ravitaillement comprenant un dispositif d'arrimage selon la description qui précède à un satellite comprenant un élément saillant de type tuyère de moteur d'apogée ou anneau d'interface lanceur, le procédé comprenant les étapes de :
- approche de l'engin spatial de remorquage ou de ravitaillement vers le satellite de sorte que la plate-forme de réception soit disposée sensiblement en regard de l'élément saillant,
- une fois le contact établi entrer l'élément saillant du satellite et la plate-forme de réception, amortissement de l'énergie cinétique de contact par le dispositif d'amortissement et de positionnement de la plate-forme de réception,
- pendant l'amortissement, capture de l'élément saillant du satellite,
- une fois l'amortissement terminé, ajustement du positionnement relatif du satellite et de l'engin spatial de remorquage ou de ravitaillement, et
- verrouillage de la liaison entre le satellite et l'engin spatial de remorquage ou de ravitaillement.

La présente porte également sur un procédé de désarrimage d'un engin spatial de remorquage ou de ravitaillement arrimé à un satellite par la mise en oeuvre du procédé selon la description qui précède, comprenant:
- le déverrouillage de la liaison entre le satellite et l'engin spatial de remorquage ou de ravitaillement,
- le déplacement de la plate-forme de réception par le dispositif d'amortissement et de positionnement pour éloigner la plate-forme de réception de la plate-forme de liaison,
- l'actionnement du dispositif de capture pour libérer le satellite, et
- la rétractation de la plate-forme de réception par le dispositif d'amortissement et de positionnement pour rapprocher la plate-forme de réception de la plate-forme de liaison.

La présente a également pour objet un procédé de commande d'un engin spatial de remorquage ou de ravitaillement depuis une station au sol, pour la mise en oeuvre d'un procédé d'arrimage ou de désarrimage en orbite selon la description qui précède.

L'invention proposée permet d'arrimer un engin spatial de remorquage ou de ravitaillement à un satellite, en capturant l'anneau d'interface lanceur ou une tuyère de moteur d'apogée du satellite. Comme une grande majorité de satellites dispose d'un tel équipement, le dispositif d'arrimage permet de réaliser un arrimage sur la plupart des satellites même si ceux-ci ne disposent pas d'un équipement dédié à l'arrimage à un engin de remorquage ou de ravitaillement.

De plus, la conception du dispositif d'arrimage, comprenant deux plates-formes reliées entre elles par des bras articulés munis d'amortisseurs magnétiques, les bras articulés laissant six degrés de liberté à la plate-forme de réception du satellite, permet d'assurer un premier contact avec des efforts inférieurs à quelques Newton sur le satellite, et un amortissement visqueux de l'énergie de contact permettant d'obtenir en fin d'amortissement une vitesse relative nulle entre le satellite et l'engin spatial.

L'organe de capture du dispositif d'arrimage permet d'empêcher, lors de la phase de dissipation, un éventuel éloignement ou rebond du satellite par rapport au dispositif d'arrimage, tout en réalisant un alignement du satellite par rapport au dispositif d'arrimage, permettant ensuite de verrouiller le satellite en liaison rigide avec le dispositif d'arrimage.

Le dispositif d'arrimage permet également de libérer le satellite en éloignant l'engin de remorquage ou de ravitaillement de celui-ci, ce qui permet d'éviter tout contact ou effort non désiré sur le satellite au moment de la libération.

### Brève description des dessins

D'autres caractéristiques, détails et avantages apparaîtront à la lecture de la description détaillée ci-après, et à l'analyse des dessins annexés, sur lesquels :
**Fig. 1**

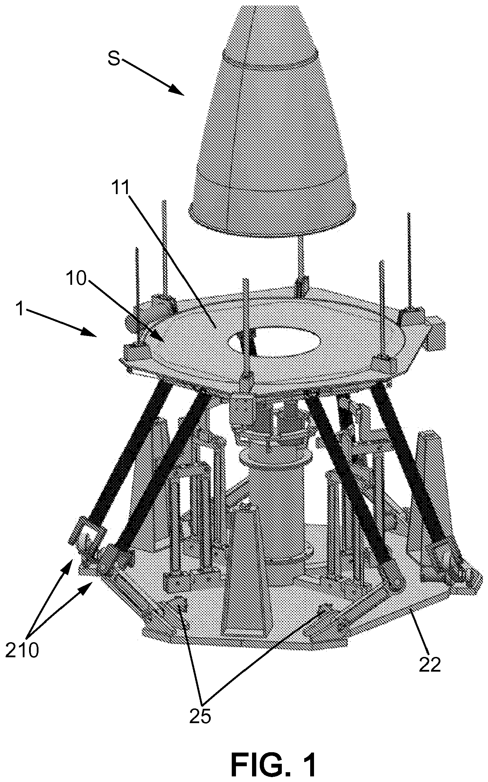

   [Fig. 1] représente un exemple de dispositif d'arrimage selon un mode de réalisation.
**Fig. 2**

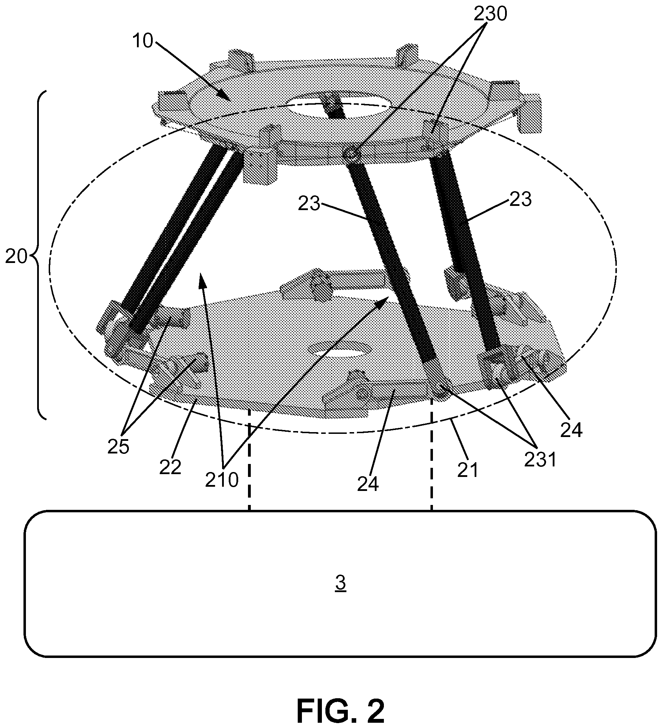

   [Fig. 2] représente un dispositif d'amortissement et de positionnement d'un dispositif d'arrimage
**Fig. 3a**

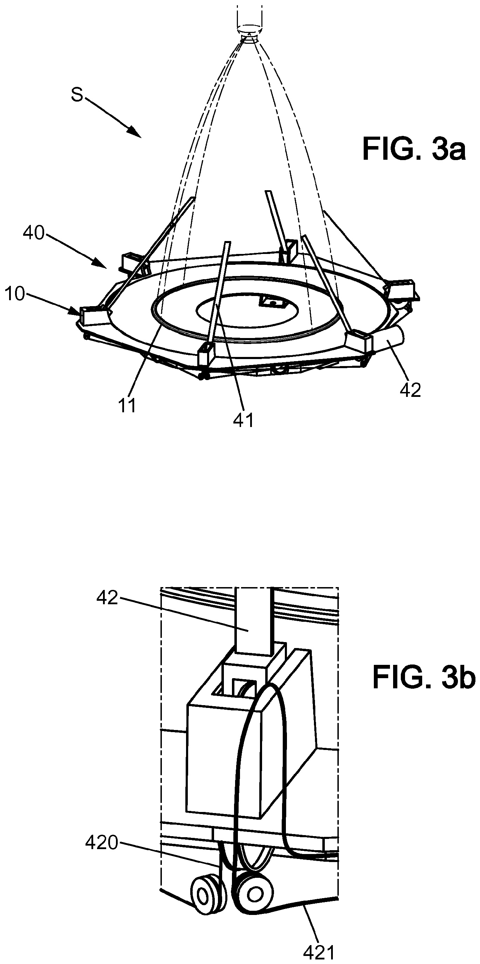

   [Fig. 3a] représente un exemple de dispositif de capture d'un dispositif d'arrimage
**Fig. 3b**
   [Fig. 3b] est une vue d'un détail d'un dispositif de capture
**Fig. 4**

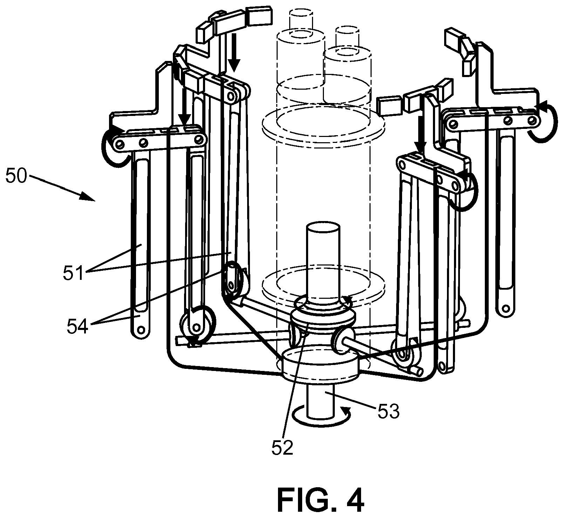

   [Fig. 4] représente schématiquement un exemple de dispositif de verrouillage d'un dispositif d'arrimage.
**Fig. 5a**

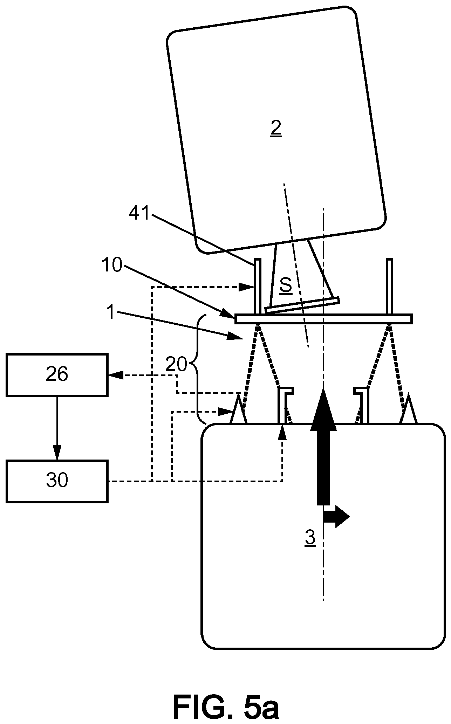

   [Fig. 5a] représente schématiquement une phase de contact d'un procédé d'arrimage selon un mode de réalisation.
**Fig. 5b**

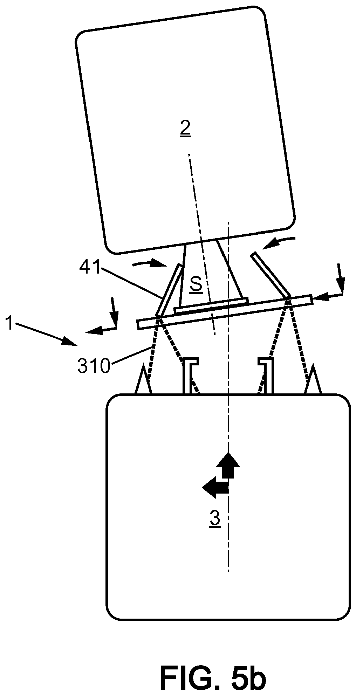

   [Fig. 5b] représente schématiquement une phase d'amortissement et de capture d'un procédé d'arrimage.
**Fig. 5c**

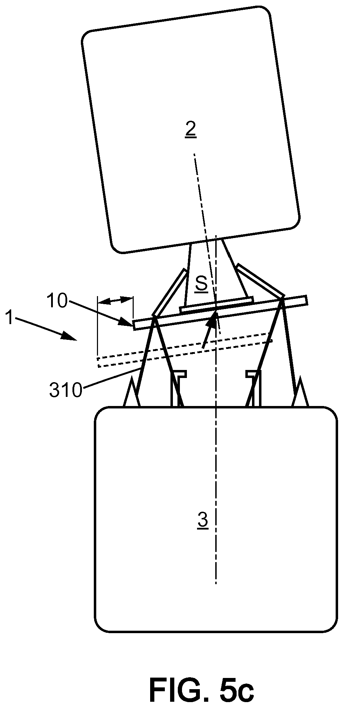

   [Fig. 5c] représente schématiquement une phase d'ajustement de la position du satellite capturé.
**Fig. 5d**

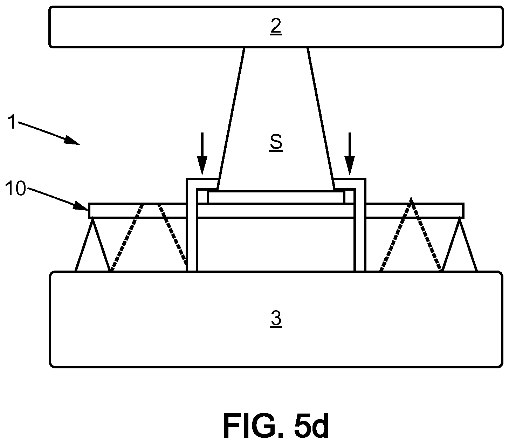

   [Fig. 5d] représente schématiquement une phase de verrouillage du satellite capturé.
**Fig. 6a**

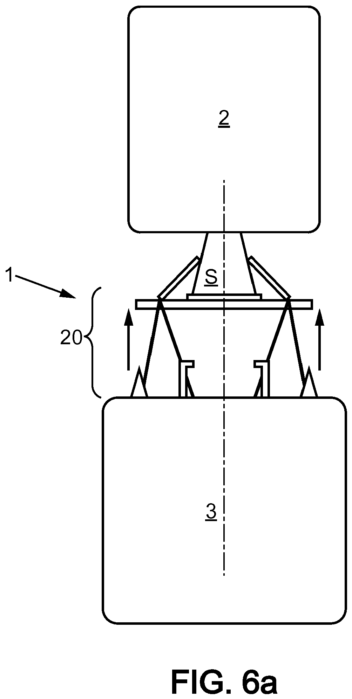

   [Fig. 6a] représente schématiquement une phase d'éloignement lors d'un procédé de désarrimage d'un satellite.
**Fig. 6b**

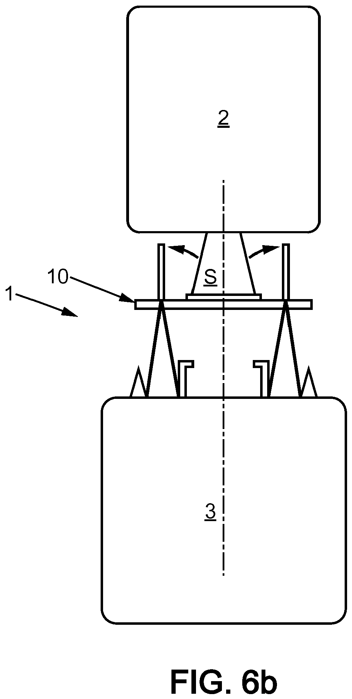

   [Fig. 6b] représente schématiquement une phase de séparation lors d'un procédé de désarrimage d'un satellite.
**Fig. 6c**

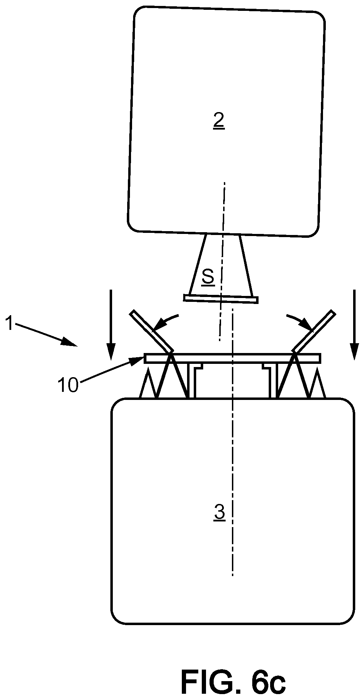

   [Fig. 6c] représente schématiquement une phase de rétractation de la plate-forme de réception du satellite.
**Fig. 7**

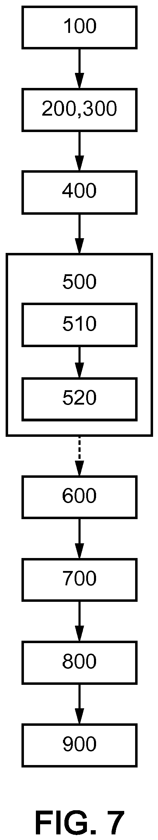

   [Fig. 7] représente schématiquement les principales étapes d'un procédé d'arrimage et de désarrimage d'un engin spatial de remorquage ou d'approvisionnement à un satellite.

### Description des modes de réalisation

Il est maintenant fait référence à la figure 1, qui représente un exemple de dispositif d'arrimage 1 en phase d'approche d'un satellite 2. Le dispositif d'arrimage 1 est adapté pour s'arrimer à un satellite ne disposant éventuellement pas d'équipement prévu spécifiquement à cet effet, mais comprenant un élément saillant S, tel qu'une tuyère de moteur d'apogée (également désignée classiquement par l'acronyme LAE pour Liquid Apogee Engine), ou un anneau d'interface lanceur (également désigné classiquement par l'acronyme LIR pour Launch Interface Ring). L'élément saillant S présente une forme sensiblement circulaire ou annulaire. Sur les figures, les exemples représentés montrent le cas où l'élément saillant S est une tuyère de moteur d'apogée.

Le dispositif d'arrimage 1 est quant à lui monté sur un engin spatial de remorquage ou de ravitaillement 3, représenté schématiquement sur les figures 5a à 5d et 6a à 6c. Par exemple, le dispositif d'arrimage 1 peut être monté sur une paroi externe d'un tel engin.

En référence à la figure 1, le dispositif d'arrimage 1 comprend une plate-forme mobile de réception 10 d'un satellite, adaptée pour recevoir et venir en appui contre l'élément saillant du satellite. Pour ce faire, la plate-forme de réception 10 est plane et présente une forme sensiblement circulaire ou polygonale. La plate-forme de réception comprend une zone de réception 11 de forme circulaire ou annulaire, dont le diamètre est strictement supérieur au diamètre externe de l'élément saillant contre lequel elle doit venir en appui. Avantageusement, le rayon de la zone de réception 11 est égal au rayon de l'élément saillant, additionné d'une marge permettant d'adapter des écarts de positionnement, cette marge étant avantageusement comprise entre 50 mm et 200 mm, par exemple égale à 100 mm.

La plate-forme de réception 10 de satellite est mobile par rapport à l'engin spatial 3 sur lequel le dispositif d'arrimage est monté. En effet, lors de l'approche de l'engin vers le satellite, des désalignements peuvent exister entre la position de la plate-forme de réception 10 et la section d'extrémité de l'élément saillant qui doit venir au contact de la plate-forme. Ces désalignements peuvent se produire en translation et en rotation. Par conséquent, la plate-forme de réception doit être mobile selon au moins cinq degrés de liberté par rapport à l'engin spatial 3, à savoir trois degrés de liberté en translation, et deux degrés en rotation, la seule rotation n'impactant pas la position relative entre la plate-forme et le satellite étant une rotation autour d'un axe sur lequel la plate-forme est centrée. Dans un mode de réalisation, la plate-forme de réception est mobile selon six degrés de liberté, dont trois en rotation, qui permettent d'amortir une éventuelle vitesse de torsion relative entre le satellite et l'engin spatial 3, qui serait transmise par frottement entre le satellite et la plate-forme de réception au moment du contact.

Ces degrés de liberté permettent également, comme détaillé ci-après, d'amortir le contact entre le satellite et la plate-forme de réception 10.

Pour réaliser la mobilité de la plate-forme 10 et l'amortissement du contact entre le satellite et la plate-forme, le dispositif d'arrimage 1 comprend un dispositif 20 d'amortissement et de positionnement de la plate-forme de réception 10, ce dispositif 20 étant également représenté sur la figure 2.

Ce dispositif 20 comprend un ensemble 21 de bras de liaison 210, reliés par une extrémité à la plate-forme de réception 10, et par l'autre extrémité à un élément fixe par rapport à l'engin spatial. Cet élément fixe peut être une paroi de l'engin spatial 3. En variante, et comme représenté sur la figure 2, le dispositif 20 d'amortissement et de positionnement comprend en outre une plate-forme de liaison 22 à l'engin spatial 3, adaptée pour être rapportée sur une paroi de l'engin spatial, et formant l'élément fixe auquel sont liés les bras articulés 210. Cette plate-forme est plane et présente une forme circulaire ou polygonale, de dimensions de préférence supérieures ou égales à celle de la plate-forme de réception 10 du satellite.

Pour permettre les mouvements de la plate-forme de réception 10, l'ensemble 21 comprend de préférence six bras de liaison 210, afin de simplifier le contrôle de la position de la plate-forme. Chaque bras de liaison comprend une première extrémité reliée à la plate-forme de réception 10 de satellite par une liaison sphérique 230, avantageusement réalisée par un joint de Cardan.

De plus, pour autoriser une variation de distance entre la plate-forme de réception 10 et la plate-forme de liaison 22 sans utiliser de liaison par glissement, susceptible d'induire des frottements et une usure prématurée des pièces dans l'espace, chaque bras 210 est articulé. Il comprend à cet égard une première tige 23 et une deuxième tige 24, les tiges étant rectilignes et rigides. La première tige 23 est reliée à la plate-forme de réception 10 par la liaison sphérique 230, et à la deuxième tige 24 par une deuxième liaison sphérique 231. La deuxième tige 24 est quant à elle montée rotative par rapport à l'élément fixe, par exemple la plate-forme de liaison 22, autour d'un seul axe.

Avantageusement, les bras 210 sont répartis selon une disposition circulaire, c'est-à-dire que les extrémités des bras du côté de la plate-forme de réception du satellite sont réparties régulièrement selon une disposition circulaire, ce cercle étant voisin du bord de la plate-forme de réception pour former un bras de levier plus important. De même, les extrémités des bras du côté de la plate-forme de liaison sont réparties régulièrement selon une dispositif circulaire de diamètre supérieur ou égal à celui formé par les extrémités des bras situées du côté de la plate-forme de réception.

Comme on comprendra sur les figures 1 et 2, la plate-forme de liaison 22 est avantageusement montée à l'engin spatial 3 de remorquage ou ravitaillement à une distance non nulle de celui-ci. D'autre part, les axes de rotation de la deuxième tige 24 de chaque bras 210 et la forme de la plate-forme de liaison 22 sont avantageusement adaptés pour permettre à chaque bras 210 d'adopter une position dans laquelle la liaison 231 entre les deux tiges se trouve à une distance inférieure par rapport à l'engin spatial 3 que la plate-forme de liaison. Par exemple, les axes de rotation de la deuxième tige de chaque bras sont avantageusement disposés radialement, avec un point de pivot situé au bord de la plate-forme de liaison, pour que la deuxième tige puisse pivoter autour de son axe sans être bloquée par la plate-forme, ce qui permet de disposer d'une course supérieure pour l'amortissement et le positionnement.

En variante, la plate-forme de liaison 22 peut présenter pour chaque bras 210 une encoche traversante permettant qu'en fin de course une partie du bras vienne s'y loger.

Selon encore une autre variante les axes de rotation des deuxièmes tiges de chaque bras peuvent être tangents au bord de la plate-forme de liaison 22.

Le dispositif d'amortissement et de positionnement comprend en outre un ensemble d'amortisseurs magnétiques 25 permettant un amortissement équivalent visqueux du contact entre le satellite et la plate-forme de réception 20, c'est-à-dire proportionnel à la vitesse relative entre le satellite et la plate-forme de réception 20 au moment du contact.

A cet égard, l'ensemble d'amortisseurs magnétiques comprend un amortisseur magnétique rotatif 25 pour chaque bras articulé 210. Chaque amortisseur magnétique est avantageusement positionné à la base de chaque bras 210, en étant relié à la deuxième tige 24 de chaque bras, de façon à amortir le mouvement de rotation de la deuxième tige par rapport à la plate-forme de liaison 22. A cet égard, chaque amortisseur 25 comprend un rotor et un stator (non représentés). Le stator est monté fixe par rapport à l'engin spatial 3 de remorquage ou de ravitaillement, en étant par exemple monté sur la plate-forme de liaison 22. Le rotor est monté rotatif par rapport au stator selon le même axe de rotation que celui de la deuxième tige 24 du bras considéré, et avantageusement la deuxième tige de chaque bras est adaptée pour entrainer en rotation le rotor de l'amortisseur correspondant.

Dans un mode de réalisation, chaque amortisseur comprend en outre un réducteur (non représenté) adapté pour multiplier la vitesse de rotation du rotor, induite par celle de la deuxième tige du bras correspondant, d'un facteur supérieur ou égal à 10, par exemple égal à 20.

Chaque amortisseur peut donc réaliser une dissipation visqueuse, par courants de Foucault, de la rotation de la deuxième tige du bras correspondant, cette rotation étant elle-même induite par le mouvement de la plate-forme de réception 20.

Le dispositif d'amortissement et de positionnement 20 de la plate-forme de réception 10 permet également de contrôler la position de cette plate-forme 10. Pour ce faire, il comprend avantageusement un capteur de position 26 (représenté schématiquement sur la figure 5a) de chaque bras de liaison. Le capteur peut être un capteur de position angulaire de la deuxième tige de chaque bras.

En outre, chaque amortisseur magnétique 25 peut avantageusement être contrôlé selon plusieurs modes, comprenant au moins :
- Un mode amortisseur, dans lequel un mouvement du bras de liaison (dans le mode de réalisation où les bras de liaison sont des bras articules, le déplacement est une rotation de la deuxième tige autour de son axe) entraine une dissipation par circulation de courants de Foucault, et
- Un mode actionneur, dans lequel l'amortisseur est commandé pour contrôler un mouvement du bras de liaison (dans le mode de réalisation où les bras de liaison sont articulés, le mouvement contrôlé est une rotation de la deuxième tige autour de son axe).

Dans un mode de réalisation, chaque amortisseur magnétique 25 peut en outre être contrôlé selon un mode supplémentaire dit mode libre, où le bras de liaison est en mouvement libre sans entrainer d'amortissement de la part de l'amortisseur.

Dans un mode de réalisation, le contrôle du mode est permis par une électronique de contrôle 30 permettant de sélectivement :
- Placer chaque amortisseur en court-circuit pour le mettre dans le mode amortisseur,
- Alimenter chaque amortisseur en tension pour le commander en mode actionneur, et
- Placer chaque amortisseur en circuit ouvert pour le mettre en mode libre.

En références aux figures 1 et 3a, le dispositif d'arrimage comprend en outre un dispositif de capture 40 de l'élément saillant du satellite, le dispositif de capture 40 étant adapté pour retenir le satellite en appui contre la plate-forme de réception de satellite 10, de façon notamment à éviter un rebond du satellite et du dispositif d'arrimage.

Le dispositif de capture 40 comprend un ensemble de tiges de retenue 41, montées sur la plate-forme de réception 10 et mobiles par rapport à celle-ci, les tiges de retenue 41 étant conformée pour permettre un appui sur l'élément saillant du satellite selon six points d'appui, afin d'empêcher un mouvement relatif de l'élément saillant du satellite par rapport à la plate-forme de réception 10 selon six degrés de liberté.

A cet égard, selon un premier mode de réalisation, le dispositif de capture 40 peut comprendre trois tiges de retenue disposées régulièrement sur la circonférence de la plate-forme de réception 10, où chaque tige de retenue comporte une extrémité formée d'un arc de cercle portant deux points d'appui. En variante, et comme représenté sur les figures, le dispositif de capture peut comprendre six tiges de retenue 41 régulièrement réparties selon une disposition circulaire, à l'extérieur de la zone de réception 11 de l'élément saillant, donc à proximité du bord de la plate-forme de réception 10.

Les tiges de retenue présentent une longueur adaptée pour venir en appui contre l'élément saillant, en tenant compte de la taille de la zone de réception 11 de la plate-forme et des éventuelles différences de tailles d'éléments saillants S des satellites pour lesquels le dispositif de capture 40 est conçu.

Chaque tige 41 est mobile en rotation autour d'un axe permettant d'incliner les tiges vers le centre de la plate-forme de liaison, cet axe étant donc tangentiel au cercle sur lequel sont disposées les tiges. De plus, le dispositif de capture 40 comprend un actionneur 42 des tiges. En référence à la figure 3b ; dans un mode de réalisation, l'actionneur 42 est unique, et chaque tige est entrainée en rotation par une poulie double 420 reliée aux deux tiges 41 adjacentes par des courroies 421. De ce fait, un seul actionneur 42 permet une transmission de mouvement simultanée à l'ensemble des tiges pour les rabattre vers le centre de la plate-forme de réception ou les en éloigner.

En référence à la figure 4, le dispositif d'arrimage 1 peut aussi comprendre un dispositif de verrouillage 50, adapté pour établir et maintenir une liaison rigide entre le dispositif d'arrimage et l'élément saillant du satellite, et donc entre l'engin spatial de remorquage ou de ravitaillement et le satellite. Ce dispositif de verrouillage 50 comprend avantageusement deux degrés de mobilité pour pouvoir verrouiller différentes tailles d'éléments saillants S de satellites, comprenant un degré de mobilité en translation radiale, dans un plan parallèle au plan de la plate-forme de liaison, permettant à des organes de préhension de s'adapter à différents diamètres d'un élément saillant S et de venir au contact de celui-ci, et un degré de mobilité en translation axiale selon un axe perpendiculaire au plan de la plate-forme de liaison, pour appliquer sur l'élément saillant un effort pour le maintenir en appui contre la plate-forme de réception.

Dans l'exemple de réalisation représenté figure 4, ces degrés de mobilité sont réalisés par des organes de retenue 51 coudés adaptés pour venir en appui contre l'élément saillant du satellite une fois celui-ci posé sur la plate-forme de réception, puis à exercer sur un rebord périphérique de cet élément une force dirigée vers la plate-forme de liaison pour maintenir en appui l'élément saillant S du satellite sur la plate-forme de réception 10.

Dans l'exemple de la figure 4, quatre organes de retenue 51 sont répartis régulièrement autour d'un axe central de la plate-forme de liaison, et peuvent être entrainés en rotation vers cet axe central par un ou plusieurs actionneurs 52. L'effort dirigé vers la plate-forme de liaison peut être mis en oeuvre par un autre actionneur 53, par exemple à l'aide d'autres poulies 54. Dans ce cas la plate-forme de réception 10 du satellite comprend avantageusement un ou plusieurs orifices prévus pour autoriser le passage des organes de retenue.

En variante, le dispositif de verrouillage peut être porté par l'engin spatial de remorquage ou de ravitaillement, indépendamment du dispositif d'arrimage.

Enfin, le dispositif d'arrimage 1 comprend également au moins un calculateur adapté pour commander les différents composants du dispositif d'arrimage, à savoir : le dispositif d'amortissement et de positionnement de la plate-forme de réception 10 du satellite, le dispositif de capture, et le cas échéant, le dispositif de verrouillage. Le calculateur peut être confondu avec l'électronique de contrôle 30 des amortisseurs évoquée ci-avant.

Plus précisément, le calculateur 30 (voir aussi figure 5a) est adapté pour contrôler ces composants pour mettre en oeuvre un procédé d'arrimage et un procédé de désarrimage décrits ci-après. Le procédé d'arrimage est décrit en référence aux figures 5a à 5d, et 7.

II comprend une première étape 100 d'approche du satellite par l'engin spatial de remorquage ou de ravitaillement. Cette approche est avantageusement réalisée à une vitesse relative faible, comprise par exemple entre 5 et 20 mm/s. En référence à la figure 5a, cette approche se poursuit jusqu'au premier contact de l'élément saillant du satellite sur la plate-forme de réception 10 du dispositif d'arrimage. Lors de cet approche, la plate-forme de réception de satellite peut être positionnée à une distance prédéterminée de la plate-forme de liaison, afin d'anticiper un rapprochement des plates-formes lié au contact de la plate-forme de réception avec le satellite.

En référence à la figure 5b, le procédé comprend alors une étape 200 d'amortissement de l'impact par dissipation visqueuse. Lors de cette étape, les amortisseurs magnétiques 25 sont contrôlés en mode amortisseur. La plate-forme de réception 10 s'adapte alors aux erreurs de position et d'orientation entre le satellite et l'engin spatial 3. La structure du dispositif d'amortissement 20 et la nature de l'amortissement visqueux permis par les amortisseurs permettent d'opposer une raideur mécanique très faible au satellite pour éviter un phénomène de rebond, et d'induire des efforts de contact très faibles sur le satellite, c'est-à-dire inférieurs à quelques Newtons. La vitesse relative entre le satellite et la plate-forme est amenée à zéro au terme de l'étape 200 d'amortissement, qui dure quelques dizaines de secondes.

Pendant la phase d'amortissement 200 a également lieu une étape de capture 300 de l'élément saillant S du satellite, réalisée en actionnant le dispositif de capture 40, pour rabattre les tiges 41 de retenue contre l'élément saillant du satellite. Ceci contribue également à empêcher un éventuel rebond du satellite. L'effort exercé par les tiges de retenue contre l'élément saillant du satellite est ici encore inférieur à quelques Newtons et même inférieur à un Newton, ce qui permet de ne pas perturber la position ou l'orientation du satellite. Dans un mode de réalisation, en fin d'amortissement et de capture, le contrôle des amortisseurs peut passer à un mode libre afin de réduire au maximum les effets sur le satellite.

En référence à la figure 5c, le procédé comprend ensuite, une fois l'amortissement et la capture terminés, une étape 400 d'ajustement du positionnement relatif du satellite par rapport au dispositif d'arrimage, sans perturber l'attitude du satellite. Lors de cette étape, les amortisseurs sont contrôlés en mode actionneur, de façon à commander les bras de liaison pour orienter la plate-forme de réception, et le satellite qui y est assemblé, selon une position désirée. Cette étape permet notamment d'amener le satellite à une position de référence où l'axe de l'élément saillant (LAE ou anneau d'interface lanceur) est parallèle, voire confondu, avec l'axe sur lequel est centrée la plate-forme de réception 10 et l'axe sur lequel est centrée la plate-forme de liaison.

Dans un mode de réalisation, l'étape 400 est décomposée en plusieurs mouvements successifs comprenant un premier mouvement 410 de translation pure de la plate-forme de réception 10 afin de centrer cette dernière par rapport au dispositif d'arrimage. C'est le mouvement représenté sur l'exemple de la figure 4c, où le centre de la plate-forme de réception 10 se trouve aligné avec un axe médian du dispositif d'arrimage, représenté en pointillés sur la figure.

Un deuxième mouvement 420, de rotation pure, a ensuite lieu, afin d'amener l'axe de l'élément saillant du satellite confondu avec l'axe du dispositif d'arrimage, ou autrement dit de ramener la plate-forme de réception 10 parallèle par rapport au support du dispositif d'arrimage sur l'engin spatial, ou par rapport à la plate-forme de liaison. Lors de ce deuxième mouvement, l'engin spatial est contrôlé simultanément au mouvement des amortisseurs utilisés en actionneurs du dispositif d'arrimage, et selon un mouvement opposé, afin d'adapter l'engin spatial de remorquage ou de ravitaillement à l'attitude du satellite, sans modifier celle-ci.

Enfin, l'orientation 400 de la plate-forme de réception comprend un troisième mouvement 430 de translation pure dans la direction de l'axe de l'engin spatial, qui est également celle du satellite, et qui correspond à la direction verticale sur les figures, afin de ramener la plate-forme de liaison à la position de référence.

Enfin, en référence à la figue 5d, le procédé comprend une étape 500 de verrouillage de la liaison entre le satellite et le dispositif d'arrimage - et donc entre le satellite et l'engin spatial 3, qui comprend une sous-étape 510 au cours de laquelle la plate-forme de réception 10 est rapprochée de la plate-forme de liaison, et une sous-étape 520 au cours de laquelle un dispositif de verrouillage vient s'engager avec l'élément saillant du satellite pour l'immobiliser et former une liaison rigide. Eventuellement, pendant cette étape les amortisseurs peuvent être commutés en mode libre ou en mode amortisseur pour ne pas opposer d'effort à un éventuel mouvement induit lors du verrouillage. L'amortissement étant proportionnel à la vitesse, et la vitesse étant faible, le mode amortisseur peut être envisagé.

En référence aux figures 6a à 6c et 7, une fois les opérations réalisées, un procédé de désarrimage de l'engin spatial de remorquage ou de ravitaillement au satellite peut être mis en oeuvre.

Ce procédé comprend avantageusement une première étape 600 lors de laquelle le dispositif de verrouillage est désengagé de l'élément saillant du satellite, tout en maintenant le dispositif de capture refermé sur l'élément saillant.

En référence à la figure 6a, le procédé comprend ensuite une étape 700 Bde déplacement de la plate-forme 10 de réception du satellite par les bras de liaison pour être éloignée de la plate-forme de liaison. Pour ce faire, les amortisseurs sont contrôlés en mode actionneur. Le dispositif de capture est toujours refermé sur l'élément saillant du satellite.

En référence à la figure 6b, le procédé comprend ensuite une étape 800 de libération du satellite, par l'ouverture du dispositif de capture.

Enfin, en référence à la figure 6c, le procédé comprend une étape 900 de rapprochement de la plate-forme 10 de réception vers la plate-forme de liaison, pour ne pas gêner l'éloignement du satellite. Pour la même raison, l'ouverture du dispositif de capture se poursuit, afin d'éloigner au maximum les tiges de retenue de l'élément saillant du satellite.

Ce procédé de désarrimage permet de libérer le satellite à une certaine distance de l'engin spatial 3, et de garantir que lors du désarrimage aucun effort n'est induit sur le satellite. Ainsi, pour le procédé d'arrimage comme pour le procédé de désarrimage, la position du satellite n'est pas perturbée par le dispositif d'arrimage 1.

Avantageusement, le dispositif d'arrimage ainsi que l'engin spatial 3 sont contrôlés depuis une station au sol, et comprennent à cet égard une interface de communication (non représentée) avec la station.

## Revendications

1. Dispositif (1) d'arrimage à un satellite comprenant sur une paroi externe un élément saillant (S), le dispositif d'arrimage étant adapté pour être monté sur un engin spatial (3) de remorquage ou de ravitaillement, le dispositif comprend :
une plate-forme mobile (10) de réception d'un satellite, adaptée pour venir en appui contre l'élément saillant du satellite,
un dispositif de capture (40) de l'élément saillant du satellite, adapté pour retenir l'élément saillant en contact contre la plate-forme de réception,
un dispositif de verrouillage (50) adapté pour maintenir une liaison rigide entre le dispositif d'arrimage et l'élément saillant du satellite, et
un dispositif d'amortissement et de positionnement (20) de la plate-forme de réception (10), comprenant :
- un ensemble (21) de bras de liaison (210) reliant la plate-forme de réception de satellite à un élément fixe par rapport à l'engin spatial (3), l'ensemble des bras de liaison étant adapté pour permettre à la plate-forme de réception un déplacement relativement à l'engin spatial (3) selon six degrés de liberté, chaque bras de liaison (210) étant articulé, et
- un ensemble d'amortisseurs magnétiques (25), adapté pour réaliser un amortissement du contact entre le satellite et la plate-forme mobile de réception proportionnel à la vitesse relative entre le satellite et la plate-forme mobile de réception, l'ensemble d'amortisseurs magnétiques comprenant, pour chaque bras de liaison, un amortisseur magnétique rotatif (25).

2. Dispositif (1) d'arrimage selon la revendication 1, dans lequel chaque bras articulé (210) comprend deux tiges, une première tige (23) comprenant une première extrémité reliée à la plate-forme de réception par une première liaison sphérique (230), et une deuxième extrémité reliée à la deuxième tige (24) par une deuxième liaison sphérique (231), et la deuxième tige étant mobile en rotation par rapport à l'engin spatial autour d'un axe.

3. Dispositif (1) d'arrimage selon la revendication 2, dans lequel chaque amortisseur magnétique (25) comprend un stator monté fixe par rapport à l'engin spatial et un rotor rotatif par rapport au stator, et la deuxième tige (24) de chaque bras (210) est adaptée pour entrainer en rotation le rotor de l'amortisseur magnétique du bras.

4. Dispositif d'arrimage selon la revendication 3, dans lequel la deuxième tige (24) entraine en rotation le rotor de l'amortisseur magnétique via un réducteur adapté pour multiplier la vitesse de rotation de la deuxième tige par rapport au stator de l'amortisseur magnétique d'un facteur supérieur à 10.

5. Dispositif d'arrimage selon l'une des revendications 1 à 3, comprenant en outre pour chaque bras articulé (210) un capteur (26) de position angulaire de la deuxième portion du bras.

6. Dispositif d'arrimage selon l'une des revendications 1 à 5, dans lequel les amortisseurs magnétiques rotatifs sont répartis selon une disposition circulaire, les axes de rotation des amortisseurs s'étendant radialement.

7. Dispositif d'arrimage selon l'une des revendications précédentes, comprenant en outre un circuit électronique (30) de commande des amortisseurs magnétiques, adapté pour contrôler les amortisseurs magnétiques selon trois modes comprenant :
- un mode amortisseur, dans lequel un mouvement du bras de liaison est amorti par dissipation d'énergie cinétique par courant de Foucault,
- un mode actionneur, permettant de contrôler un mouvement du bras de liaison, et
- un mode libre, dans lequel un mouvement du bras de liaison n'entraine aucun amortissement.

8. Dispositif d'arrimage selon l'une des revendications précédentes, dans lequel le dispositif d'amortissement et de positionnement (20) de la plate-forme de réception (10) comprend en outre une plate-forme de liaison (22) à l'engin spatial, adaptée pour être assemblée audit engin, et l'ensemble des bras articulés (210) relie la plate-forme de réception (10) à la plate-forme de liaison (22).

9. Dispositif d'arrimage selon l'une des revendications précédentes, dans lequel le dispositif de capture (40) comprend un ensemble de tiges de retenue (41) montées sur la plate-forme de réception (10), et comprenant au moins six points d'appui sur un élément saillant (S) de satellite, et un actionneur (42) adapté pour amener les points d'appui de l'ensemble des tiges de retenue en appui contre l'élément saillant du satellite.

10. Dispositif d'arrimage selon la revendication précédente, dans lequel l'ensemble de tiges (41) de retenue comprend six tiges (41) réparties circulairement à la périphérie de la plate-forme de réception (20), chaque tige de retenue étant montée rotative autour d'un axe tangentiel, et l'actionneur comprend un système d'actionnement à poulies (420) et courroies (421) adapté pour permettre une mise en rotation simultanée des tiges vers le centre de la plate-forme de réception.

11. Procédé d'arrimage d'un engin spatial (3) de remorquage ou de ravitaillement comprenant un dispositif d'arrimage (1) selon l'une des revendications précédentes à un satellite (2) comprenant un élément saillant (S) de type tuyère de moteur d'apogée ou anneau d'interface lanceur, le procédé comprenant les étapes de :
- approche (100) de l'engin spatial de remorquage ou de ravitaillement vers le satellite de sorte que la plate-forme de réception soit disposée sensiblement en regard de l'élément saillant,
- une fois le contact établi entrer l'élément saillant du satellite et la plate-forme de réception, amortissement (200) de l'énergie cinétique de contact par le dispositif d'amortissement et de positionnement de la plate-forme de réception,
- pendant l'amortissement, capture (300) de l'élément saillant du satellite,
- une fois l'amortissement terminé, ajustement (400) du positionnement relatif du satellite et de l'engin spatial de remorquage ou de ravitaillement, et
- verrouillage (500) de la liaison entre le satellite et l'engin spatial de remorquage ou de ravitaillement.

12. Procédé de désarrimage d'un engin spatial de remorquage ou de ravitaillement (3) arrimé à un satellite (2) par la mise en oeuvre du procédé selon la revendication précédente, comprenant:
- le déverrouillage (600) de la liaison entre le satellite et l'engin spatial de remorquage ou de ravitaillement,
- le déplacement (700) de la plate-forme de réception par le dispositif d'amortissement et de positionnement pour éloigner la plate-forme de réception de la plate-forme de liaison,
- l'actionnement (800) du dispositif de capture pour libérer le satellite, et
- la rétractation (900) de la plate-forme de réception par le dispositif d'amortissement et de positionnement pour rapprocher la plate-forme de réception de la plate-forme de liaison.

13. Procédé de commande d'un engin spatial de remorquage ou de ravitaillement (3) depuis une station au sol, pour la mise en oeuvre d'un procédé d'arrimage en orbite suivant la revendication 11 ou de désarrimage suivant la revendication 12.

## Patentansprüche

1. Andockvorrichtung (1) zum Andocken an einen Satelliten, der an einer Außenwand ein vorspringendes Element (S) aufweist, wobei die Andockvorrichtung angepasst ist, um an einem Schlepp- oder Versorgungsraumfahrzeug (3) angebracht zu werden, wobei die Vorrichtung aufweist:
eine mobile Empfangsplattform (10) zum Empfangen eines Satelliten, die angepasst ist, um in Stützung gegen das vorspringende Element des Satelliten zu kommen,
eine Greifvorrichtung (40) zum Greifen des vorspringenden Elements des Satelliten, die angepasst ist, um das vorspringende Element in Kontakt gegen die Empfangsplattform zu halten,
eine Verriegelungsvorrichtung (50), die angepasst ist, um eine starre Verbindung zwischen der Andockvorrichtung und dem vorspringenden Element des Satelliten aufrechtzuerhalten, und
eine Dämpfungs- und Positionierungsvorrichtung (20) zum Dämpfen und Positionieren der Empfangsplattform (10), aufweisend:
- eine Anordnung (21) von Verbindungsarmen (210), die die Satellitenempfangsplattform mit einem bezüglich des Raumfahrzeugs (3) stationären Element verbindet, wobei die Verbindungsarmanordnung angepasst ist, um eine Bewegung der Empfangsplattform relativ zu dem Raumfahrzeug (3) gemäß sechs Freiheitsgraden zu erlauben, wobei jeder Verbindungsarm (210) gelenkig ist, und
- eine Anordnung von magnetischen Dämpfern (25), die angepasst ist, um eine Dämpfung des Kontakts zwischen dem Satelliten und der mobilen Empfangsplattform proportional zu der Relativgeschwindigkeit zwischen dem Satelliten und der mobilen Empfangsplattform zu realisieren, wobei die Anordnung von magnetischen Dämpfern für jeden Verbindungsarm einen magnetischen Rotationsdämpfer (25) aufweist.

2. Andockvorrichtung (1) nach Anspruch 1, in welcher jeder Gelenkarm (210) zwei Stangen aufweist, wobei eine erste Stange (23) ein erstes Ende, das über eine erste Kugelverbindung (230) mit der Empfangsplattform verbunden ist, und ein zweites Ende, das über eine zweite Kugelverbindung (231) mit der zweiten Stange (24) verbunden ist, aufweist, und wobei die zweite Stange bezüglich des Raumfahrzeugs rotationsmobil um eine Achse ist.

3. Andockvorrichtung (1) nach Anspruch 2, in welcher jeder magnetische Dämpfer (25) einen bezüglich des Raumfahrzeugs stationär angebrachten Stator und einen bezüglich des Stators drehbaren Rotor aufweist, und die zweite Stange (24) jedes Arms (210) angepasst ist, um den Rotor des magnetischen Dämpfers des Arms in Rotation zu versetzen.

4. Andockvorrichtung nach Anspruch 3, in welcher die zweite Stange (24) den Rotor des magnetischen Dämpfers über ein Reduktionsgetriebe in Rotation versetzt, um die Rotationsgeschwindigkeit der zweiten Stange bezüglich des Stators des magnetischen Dämpfers um einen Faktor von mehr als 10 zu vervielfachen.

5. Andockvorrichtung nach einem der Ansprüche 1 bis 3, aufweisend ferner für jeden Gelenkarm (210) einen Detektor (26) zum Detektieren einer Winkelposition des zweiten Teils des Arms.

6. Andockvorrichtung nach einem der Ansprüche 1 bis 5, in welcher die magnetischen Rotationsdämpfer gemäß einer Kreisanordnung verteilt sind, wobei die Rotationsachsen der Dämpfer sich radial erstrecken.

7. Andockvorrichtung nach einem der vorstehenden Ansprüche, aufweisend ferner eine elektronische Schaltung (30) zur Steuerung der magnetischen Dämpfer, die angepasst ist, um die magnetischen Dämpfer gemäß drei Modi zu steuern, die aufweisen:
- einen Dämpfungsmodus, in welchem eine Bewegung des Verbindungsarms durch Dissipation von kinetischer Energie durch Foucaultsche Ströme gedämpft wird,
- einen Betätigungsmodus, der eine Steuerung einer Bewegung des Verbindungsarms erlaubt, und
- einen freien Modus, in welchem eine Bewegung des Verbindungsarms keine Dämpfung zur Folge hat.

8. Andockvorrichtung nach einem der vorstehenden Ansprüche, in welcher die die Empfangsplattform (10) dämpfende und positionierende Dämpfungs- und Positionierungsvorrichtung (20) ferner eine Raumfahrzeug-Verbindungsplattform (22) aufweist, die angepasst ist, um an dem Raumfahrzeug angebracht zu werden, und wobei die Anordnung der Gelenkarme (210) die Empfangsplattform (10) mit der Verbindungsplattform (22) verbindet.

9. Andockvorrichtung nach einem der vorstehenden Ansprüche, in welcher die Greifvorrichtung (40) aufweist: eine Anordnung von Haltestangen (41), die an der Empfangsplattform (10) angebracht sind und mindestens sechs Stützpunkte zur Stützung auf ein vorspringendes Satellitenelement (S) aufweisen, und einen Aktuator (42), der angepasst ist, um die Stützpunkte der Haltestangenanordnung in Stützung gegen das vorspringende Element des Satelliten zu bringen.

10. Andockvorrichtung nach dem vorstehenden Anspruch, in welcher die Anordnung von Haltestangen (41) sechs Stangen (41) aufweist, die kreisförmig am Rand der Empfangsplattform (20) verteilt sind, wobei jede Haltestange um eine tangentiale Achse drehbar angebracht ist, und der Aktuator ein Betätigungssystem mit Scheiben (420) und Riemen (421) aufweist, das angepasst ist, um zu erlauben, die Stangen gleichzeitig in Rotation hin zur Mitte der Empfangsplattform zu versetzen.

11. Verfahren zum Andocken eines Schlepp- oder Versorgungsraumfahrzeugs (3), das eine Andockvorrichtung (1) nach einem der vorstehenden Ansprüche aufweist, an einen Satelliten (2), der ein vorspringendes Element (S) des Typs Apogäummotor-Schubdüse oder Startfahrzeug-Zwischenring aufweist, wobei das Verfahren die Schritte aufweist:
- Annähern (100) des Schlepp- oder Versorgungsraumfahrzeugs an den Satelliten derart, dass die Empfangsplattform im Wesentlichen gegenüber dem vorspringenden Element angeordnet ist,
- nachdem der Kontakt zwischen dem vorspringenden Element des Satelliten und der Empfangsplattform hergestellt ist, Dämpfen (200) der kinetischen Kontaktenergie mithilfe der die Empfangsplattform dämpfenden und positionierenden Dämpfungs- und Positionierungsvorrichtung (20),
- während der Dämpfung, Greifen (300) des vorspringenden Elements des Satelliten,
- nachdem die Dämpfung beendet ist, Anpassen (400) der Relativposition des Satelliten und des Schlepp- oder Versorgungsraumfahrzeugs, und
- Verriegeln (500) der Verbindung zwischen dem Satelliten und dem Schlepp- oder Versorgungsraumfahrzeug.

12. Verfahren zum Abdocken eines Schlepp- oder Versorgungsraumfahrzeugs (3), das durch Durchführen des Verfahrens nach dem vorstehenden Anspruch angedockt worden ist, aufweisend:
- das Entriegeln (600) der Verbindung zwischen dem Satelliten und dem Schlepp- oder Versorgungsraumfahrzeug,
- das Verschieben (700) der Empfangsplattform mithilfe der Dämpfungs- und Positionierungsvorrichtung, um die Empfangsplattform von der Verbindungsplattform weg zu rücken,
- die Betätigung (800) der Greifvorrichtung, um den Satelliten freizugeben, und
- das Zurückziehen (900) der Empfangsplattform mithilfe der Dämpfungs- und Positionierungsvorrichtung, um die Empfangsplattform an die Verbindungsplattform heranzurücken.

13. Verfahren zur Steuerung eines Schlepp- oder Versorgungsraumfahrzeugs (3) von einer Bodenstation aus, um ein Andockverfahren im Orbit nach Anspruch 11 oder Abdockverfahren nach Anspruch 12 durchzuführen.

## Claims

1. Docking device (1) for docking to a satellite comprising a protruding element (S) on an external wall, the docking device being suitable for being mounted on a towing or refueling spacecraft (3), the device comprises:
a mobile receiving platform (10) for a satellite, suitable for resting against the protruding element of the satellite,
a capture device (40) for capturing the protruding element of the satellite, suitable for keeping the protruding element in contact against the receiving platform,
a locking device (50) suitable for maintaining a rigid connection between the docking device and the protruding element of the satellite, and
a device (20) for damping and positioning the receiving platform (10), comprising:
- a set (21) of link arms (210) connecting the satellite receiving platform to a member that is fixed relative to the spacecraft (3), the set of link arms being suitable for enabling the receiving platform to move in six degrees of freedom relative to the spacecraft (3), each link arm (210) being articulated, and
- a set of magnetic dampers (25), suitable for damping the contact between the satellite and the mobile receiving platform in proportion to the relative speed between the satellite and the mobile receiving platform, the set of magnetic dampers comprises a rotatable magnetic damper (25) per each link arm.

2. Docking device (1) according to claim 1, wherein each articulated arm (210) comprises two rods, a first rod (23) comprising a first end connected to the receiving platform by a first spherical connection (230), and a second end connected to the second rod (24) by a second spherical connection (231), the second rod being rotatable relative to the spacecraft about an axis.

3. Docking device (1) according to claim 2, wherein each magnetic damper (25) comprises a stator fixedly mounted relative to the spacecraft and a rotor rotatable relative to the stator, and the second rod (24) of each arm (210) is suitable for rotating the rotor of the magnetic damper of the arm.

4. Docking device according to claim 3, wherein the second rod (24) rotates the rotor of the magnetic damper via a reduction gear suitable for multiplying the speed of rotation of the second rod relative to the stator of the magnetic damper by a factor greater than 10.

5. Docking device according to one of claims 1 to 3, further comprising, for each articulated arm (210), a sensor (26) for sensing the angular position of the second portion of the arm.

6. Docking device according to one of claims 1 to 5, wherein the rotary magnetic dampers are distributed in a circular arrangement, the axes of rotation of the dampers extending radially.

7. Docking device according to one of the preceding claims, further comprising an electronic circuit (30) for controlling the magnetic dampers, suitable for controlling the magnetic dampers according to three modes which include:
- a damper mode, in which movement of the link arm is damped by dissipation of kinetic energy via eddy current,
- an actuator mode, making it possible to control movement of the link arm, and
- a free mode, in which movement of the link arm does not cause any damping.

8. Docking device according to one of the preceding claims, wherein the device (20) for damping and positioning the receiving platform (10) further comprises a connecting platform (22) for connection to the spacecraft, suitable for being assembled to said craft, and the set of articulated arms (210) connects the receiving platform (10) to the connecting platform (22).

9. Docking device according to one of the preceding claims, wherein the capture device (40) comprises a set of retaining rods (41) mounted on the receiving platform (10), and comprising at least six bearing points against a protruding element (S) of the satellite, and an actuator (42) suitable for bringing the bearing points of the set of retaining rods to bear against the protruding element of the satellite.

10. Docking device according to the preceding claim, wherein the set of retaining rods (41) comprises six rods (41) distributed circularly around the periphery of the receiving platform (20), each retaining rod being mounted so as to rotate about a tangential axis, and the actuator comprises an actuation system with pulleys (420) and belts (421) that is suitable for enabling simultaneous rotation of the rods towards the center of the receiving platform.

11. Method for docking a towing or refueling spacecraft (3) comprising a docking device (1) according to one of the preceding claims, to a satellite (2) comprising a protruding element (S) such as a nozzle of a liquid apogee engine or a launcher interface ring, the method comprising the steps of:
- moving (100) the towing or refueling spacecraft towards the satellite such that the receiving platform is positioned substantially opposite the protruding element,
- once contact has been established between the protruding element of the satellite and the receiving platform, damping (200) the kinetic energy from contact, by means of the device for damping and positioning the receiving platform,
- during damping, capturing (300) the protruding element of the satellite,
- once damping is complete, adjusting (400) the relative positioning of the satellite and the towing or refueling spacecraft, and
- locking (500) the connection between the satellite and the towing or refueling spacecraft.

12. Method for undocking a towing or refueling spacecraft (3) docked to a satellite (2) by implementing the method according to the preceding claim, comprising:
- unlocking (600) the connection between the satellite and the towing or refueling spacecraft,
- moving (700) the receiving platform by means of the device for damping and positioning so as to move the receiving platform away from the connecting platform,
- actuating (800) the capture device so as to release the satellite, and
- retracting (900) the receiving platform by means of the device for damping and positioning so as to bring the receiving platform closer to the connecting platform.

13. Method for controlling a towing or refueling spacecraft (3) from a ground station, in order to implement a method for docking in orbit according to claim 11 or for undocking according to claim 12.
